# FASCICULE DE BREVET EUROPEEN

(11) **EP 1 041 797 B1**
(45) Date de publication et mention de la délivrance du brevet: **02.02.2005**
(21) Numéro de dépôt: 00460015.1
(22) Date de dépôt: 24.02.2000
(51) Int. Cl.: H04M 1/00

(54) **Terminal téléphonique pourvu de moyens de gestion de la visualisation de menus et procédé correspondant**
Telefonendgerät mit Mitteln zur Verwaltung von Menüanzeige und zugehöriges Verfahren
Telephone terminal having menu display management means and method

(30) Priorité: 01.04.1999 FR 9904294
(43) Date de publication de la demande: 04.10.2000
(73) Titulaire: Société Française du Radiotéléphone-SFR, 75008 Paris (FR)
(72) Inventeur: De Kermadec, Alain M., 75007 Paris (FR)
(74) Mandataire: Vidon, Patrice

(56) Documents cités:
- EP-A- 0 491 516
- GB-A- 2 262 630
- GB-A- 2 278 756
- US-A- 5 381 463
- US-A- 5 737 394

## Description

Le domaine de l'invention est celui des télécommunications, notamment des radiocommunications.

Plus précisément, l'invention concerne un terminal téléphonique permettant notamment la visualisation de menus comprenant chacun une pluralité d'items, c'est-à-dire d'options susceptibles d'être activées sélectivement par l'utilisateur. Chaque option correspond par exemple à une fonction, une donnée ou un service, voire un sous-menu.

Le terminal téléphonique de l'invention peut notamment, mais non exclusivement, être un radiotéléphone (ou terminal mobile, ou ME pour "Mobile Equipment" en anglais selon la terminologie GSM pour "Global System for Mobile communications" en anglais) par exemple compatible avec un système de radiocommunication de type GSM, DCS 1800 (pour "Digital Cellular System 1800 MHz" en anglais), PCS 1900 (pour "Personal Communication System" en anglais), DECT (pour "Digital European Cordless Télécommunications" en anglais), ou encore UMTS (pour "Universal Mobile Telecommunication System" en anglais).

On considère ici que le terminal téléphonique est du type comprenant un clavier muni d'une pluralité de touches et un écran de visualisation permettant notamment la visualisation de menus. Chaque menu comporte généralement une pluralité d'items.

La visualisation et la sélection des items dans ces menus s'effectuent généralement soit par déplacement d'un curseur, soit plus simplement par défilement (ou "scrolling" en anglais) par lequel la définition ou la description des items apparaît sur une fenêtre active à l'écran (par exemple en regard d'un repère ou équivalent). Cette définition ou cette description peut être soit une indication verbale (ce que signifie éthymologiquement le terme "item "), soit une icône ou un autre type de représentation figurative renvoyant systématiquement à l'option sélectionnable. L'utilisateur du terminal téléphonique peut faire apparaître et défiler (par exemple face à un repère fixe) sur l'écran de visualisation du terminal téléphonique, les items, en appuyant sur une ou plusieurs touche(s) de déplacement prévue(s) sur le clavier. On prévoit par exemple deux touches de déplacement assurant respectivement un déplacement vers le haut et vers le bas. L'utilisateur peut ensuite appuyer sur une touche permettant une sélection de l'item faisant face au repère ou se trouvant sur la première ligne de la fenêtre active.

Une telle technique présente cependant de nombreux inconvénients.

En effet, la taille de l'écran de visualisation étant limitée généralement à quelques lignes, certains menus ne peuvent pas être affichés intégralement. En d'autres termes, certains des items de ces menus n'apparaissent pas à l'écran.

En conséquence, afin de visualiser l'ensemble des items dans un même menu, l'utilisateur est fréquemment obligé de déplacer le curseur à l'aide des touches de déplacement. Il doit donc parcourir les items jusqu'à visualiser celui qui l'intéresse. Dans le pire cas, l'utilisateur peut même sélectionner, de manière malencontreuse, un item différent de l'item souhaité, ou encore s'apercevoir finalement que l'item qu'il recherche n'existe pas.

Ensuite, dans l'hypothèse où l'item recherché se situe plutôt en fin du menu concerné, et si ce menu comporte un nombre élevé d'items, le temps de parcours du menu est important. De ce fait, l'item requérant une telle recherche est très peu souvent observé. A fortiori, un tel besoin de temps peut parfois dissuader l'utilisateur de sélectionner l'item voulu, voire le laisser dans l'ignorance de ces items.

Il est à noter que, dans le cas d'un radiotéléphone, où les items peuvent correspondre à des fonctionnalités (fonctions et/ou services) proposées par l'opérateur (ou par un offreur de services tiers ayant passé un contrat avec l'opérateur ; voir discussion détaillée ci-dessous), ceci revient à dire que certaines des fonctionnalités opérateur sont peu, voire jamais, utilisées. On comprend aisément que l'opérateur a alors des difficultés à persuader les offreurs de services tiers de voir leurs items (c'est-à-dire leurs fonctionnalités) occuper des emplacements, au sein du menu concerné, non visibles directement à l'écran.

Par ailleurs, l'utilisateur du terminal téléphonique ne peut directement prendre connaissance des items disponibles et susceptibles de l'intéresser. Or, l'utilisateur sélectionne bien souvent uniquement les items qui se trouvent directement à sa disposition.

Enfin, les items compris dans les menus ne sont pas présentés selon un ordre prioritaire, faisant ressortir une partie des fonctions ou données préférentielles.

Le document D1 (le brevet US 5,737,394) concerne un terminal téléphonique comprenant une pluralité de touches dédiées, une pluralité de touches programmables (chacune associée à au moins une fonction dédiée), un bouton de défilement («scroll button») et un écran d'affichage. Le terminal est adapté pour réaliser une pluralité de fonctions principales (notamment les fonctions menus, messages, bloc-notes, répertoire) excellents exemples de ce qui est décrit ci-dessus sous l'appellation menus ou fonctions «constructeur». La fonction menu identifie ou liste plusieurs autres fonctions ou caractéristiques que l'utilisateur peut activer. Chacune des fonctions principales peut être accédée directement par l'appui d'une seule touche. Les touches programmables «softkeys» sont associées à des fonctions ou caractéristiques qui changent selon le mode sélectionné. Le bouton de défilement permet notamment à l'utilisateur de balayer et faire défiler des caractéristiques de menu.

Le document D2 (le brevet US 5,381,463) concerne un procédé de verrouillage/déverrouillage de fonctions présentées dans différentes sections d'une hiérarchie de menus au sein d'un terminal téléphonique. Pour accéder à une fonction l'utilisateur entre un mot de passe quand il se trouve dans la même section que la fonction à accéder. Après que le mot de passe est entré, un accès direct à la fonction sélectionnée est alors autorisé. D2 rapelle également qu'il est connu d'utiliser des touches de clavier pour accéder à des fonctionnalités disponibles à l'écran, notamment les touches «Menu» et «Dir» qui permettent de configurer le terminal dans un état local correspondant à un menu principal.

Le document D3 (la demande GB 2 262 630) concerne un dispositif électronique, par exemple un téléphone, présentant un jeu de fonctions sélectionnables par menu. Chaque fonction est associée à une adresse distincte, mais l'utilisateur peut utiliser une adresse particulière en utilisant le clavier afin de sélectionner une de ces fonctions. Il est ici proposé d'utiliser une table de recherche pour convertir, en adresse de fonction, les adresses entrées par l'utilisateur.

La présente invention a pour objectif de pallier ces différents inconvénients de l'état de la technique.

Plus précisément, l'un des objectifs de la présente invention est de fournir un terminal téléphonique permettant, par rapport à l'état de la technique, une sélection plus simple, plus rapide, plus aisée et plus efficace d'au moins certain(s) item(s) d'au moins un menu.

Un objectif supplémentaire de l'invention est de fournir un tel terminal rendant plus facile l'accès à au moins certains items, afin d'encourager l'utilisateur à utiliser une partie ou l'ensemble des items disponibles et/ou à lui clarifier l'ensemble des choix possibles.

Un autre objectif de l'invention est de fournir un tel terminal téléphonique permettant à un utilisateur d'accéder, de façon rapide, à au moins certain(s) menu(s) et/ou à au moins certain(s) item(s) de menu(s) disponible(s).

Un autre objectif de l'invention est de fournir un tel terminal téléphonique permettant d'optimiser l'utilisation des ressources disponibles.

Encore un autre objectif de l'invention est de fournir un tel terminal téléphonique permettant de mettre en évidence au moins certain(s) item(s) du ou des menus disponible(s) selon un ordre prioritaire (fixé par l'opérateur).

Ces différents objectifs, ainsi que d'autres qui apparaîtront par la suite, sont atteints selon l'invention, à l'aide d'un terminal téléphonique selon la revendication 1.

En d'autres termes, l'utilisateur est invité à sélectionner les items non en utilisant la procédure connue de défilement qui lui permet de visualiser la description de l'item pour l'activer, mais directement en pressant une ou des touche(s) affectée(s) à l'item désiré, sans qu'il ait besoin d'avoir préalablement visualisé la définition de l'item avant de l'activer.

Cette procédure permet donc à l'utilisateur d'avoir un accès direct aux options des menus, minimisant les risques d'erreurs de sélection. L'accès direct peut d'ailleurs s'effectuer pour des items dont la description est visualisée ou visualisable sur l'écran du terminal téléphonique, voire pour des items dont l'utilisateur devra mémoriser la nature, sans qu'il ait une assistance de visualisation par l'écran du terminal. En outre, l'accès direct à certains items encourage un utilisateur du terminal téléphonique à utiliser les items concernés. Cet accès direct permet également de clarifier, vis-à-vis de l'utilisateur, l'ensemble des choix d'items possibles.

Du fait qu'un simple appui sur une ou des touches suffit à sélectionner l'item désiré, cette sélection est plus simple, plus rapide, plus aisée et plus efficace que celle de l'état de la technique.

Il convient de noter que, dans le cas d'un radiotéléphone, l'affectation de l'ensemble des touches pour accéder et sélectionner l'ensemble des items est figée et prédéfinie par l'opérateur. En d'autres termes, ni l'utilisateur ni le constructeur du terminal téléphonique n'interviennent dans l'affectation de ces touches permettant l'accès direct aux items et leur sélection.

De façon avantageuse, ledit clavier comprend, à l'intérieur de et/ou sur et/ou à proximité d'au moins une desdites touches, au moins un élément d'identification de l'item associé à ladite au moins une touche dans au moins un desdits menus.

En d'autres termes, les items que l'on cherche à faire sélectionner le plus souvent sont mis en évidence. Les éléments d'identification peuvent être d'un type quelconque (lumière(s), annotation(s) au-dessus ou à proximité de la(des) touche(s) associée(s),...). La(les) touche(s) concernée(s) par la mise en évidence est(sont) par exemple celle(s) sur laquelle (lesquelles) on désire que l'utilisateur agisse prioritairement.

Selon un mode de réalisation particulier de l'invention, l'appui sur une unique touche dudit clavier assure directement la sélection de l'item correspondant.

Une telle caractéristique d'accès et de sélection d'un item par l'appui sur une unique touche du clavier est la solution la plus directe et donc la plus performante.

Avantageusement, l'appui sur ladite au moins une touche assure une visualisation puis une activation dudit item affecté à ladite au moins une touche.

Dans un mode de réalisation préférentiel de l'invention, ledit terminal téléphonique permet l'accès à au moins deux niveaux successifs de menus, l'affectation de ladite au moins une touche étant spécifiquement adaptée à chacun desdits menus.

En d'autres termes, à chaque fois que l'utilisateur change de niveau de menu (notamment lors de l'accès à un sous-menu), les moyens de gestion contrôlent et opèrent une reconfiguration du plan d'affectation de la (des) touche(s) d'accès à un (aux différents) item(s).

De façon préférentielle, ladite affectation de ladite au moins une touche est effectuée conformément à une norme prédéterminée selon laquelle la composition de chacun desdits menus se présente d'une façon unique et prédéterminée, lesdits menus étant conçus de façon que chacun desdits items est affecté à au moins une touche distincte dudit terminal téléphonique.

Une telle normalisation permet de rendre affectable la totalité des items disponibles dans chaque menu (ou sous-menu) par exemple à l'aide d'un jeu de touches distinctes du clavier du terminal.

Avantageusement, lesdits menus comprenant un menu principal et des sous-menus accessibles depuis le menu principal, ledit menu principal est accessible à l'aide d'une touche du clavier dédiée à cet accès.

Ainsi, par un simple appui sur la touche dédiée, l'utilisateur peut revenir, de façon immédiate, au menu principal, et ce quel que soit l'endroit où il se trouve dans les menus (ou sous-menus).

De façon avantageuse, l'accès auxdits items est également possible, dans chacun desdits menus, à l'aide de moyens permettant le défilement d'une indication de pré-sélection dans ledit menu et d'une commande de validation de ladite pré-sélection.

En d'autres termes, la solution classique actuelle d'accès à un item (par défilement) et de sa sélection (par l'utilisation d'une touche dédiée) est proposée à l'utilisateur, en parallèle à la solution propre à la présente invention, et discutée ci-dessus. De cette façon, l'utilisateur dispose de deux solutions distinctes pour accéder et sélectionner chaque item, ce qui facilite l'utilisation d'au moins certains items.

De façon préférentielle, il s'agit d'un radiotéléphone d'un système de radiocommunication.

Avantageusement, ledit système de radiocommunication appartient au groupe comprenant :
- les systèmes de radiocommunication de type GSM ;
- les systèmes de radiocommunication de type DCS 1800 ;
- les systèmes de radiocommunication de type PCS 1900 ;
- les systèmes de radiocommunication de type UMTS ;
- les systèmes de radiocommunication de type DECT.

Cette liste de systèmes de radiocommunication n'est nullement exhaustive.

Préférentiellement, ledit support de données amovible est intégré au moins en partie dans un module d'identification d'abonné.

On rappelle que, selon les normes actuellement en vigueur, le radiotéléphone comprend des moyens de lecture et/ou d'écriture d'un module d'identification d'abonné pouvant éventuellement piloter ledit radiotéléphone. Le module d'identification d'abonné est souvent identifié par l'acronyme SIM (pour "Subscriber Identity Module" en anglais selon la terminologie GSM), ou encore DAM (pour "DECT Authentication Mobile" en anglais selon la terminologie DECT).

Dans ce cas, au moins certains des menus gérés par les moyens de gestion peuvent être des "menus opérateur", et non pas uniquement des "menus constructeur".

On distingue, en effet, généralement deux types de menu disponibles sur un radiotéléphone, à savoir :
- les menus, dits "menus constructeur", proposant des fonctionnalités (fonctions et/ou services) gérées par le terminal téléphonique (telles que par exemple le réglage de l'intensité lumineuse de l'écran du terminal). Le contenu des "menus constructeur" dépend donc du constructeur du terminal ;
- les menus, dits "menus opérateur", proposant des fonctionnalités (fonctions et/ou services) gérées par le module d'identification d'abonné (telles que par exemple l'accès à des serveurs de services distants propres à l'opérateur et/ou à un offreur de services tiers ayant passé un contrat avec l'opérateur). Le contenu des "menus opérateur" dépend donc de l'opérateur ayant distribué ce module d'identification d'abonné et/ou de l'offreur de services tiers. Les opérateurs tentent bien sûr de proposer un choix maximal de fonctionnalités au sein de leurs "menus opérateur".

Dans le cas du GSM, l'accès à des "menus opérateur" suppose généralement que le terminal et le module d'identification d'abonné supportent l'application normalisée "SIM Application Toolkit", telle que décrite en détail dans les normes "GSM 11.11, GSM 11.14 et GSM 11.14 (Phase 2+)" de l'ETSI (qui sont insérées ici par référence). Le module d'identification d'abonné est alors qualifié de "proactive SIM", selon la terminologie GSM. En résumé, le "SIM Application Toolkit" est un jeu de commandes et de procédures (protocoles) permettant au module d'identification d'abonné de gérer des fonctionnalités en "prenant la main" (à la place du terminal) et en envoyant des commandes au terminal.

L'invention concerne également un procédé de gestion de la visualisation de menu(s) mis en oeuvre par le terminal téléphonique décrit ci-dessus.

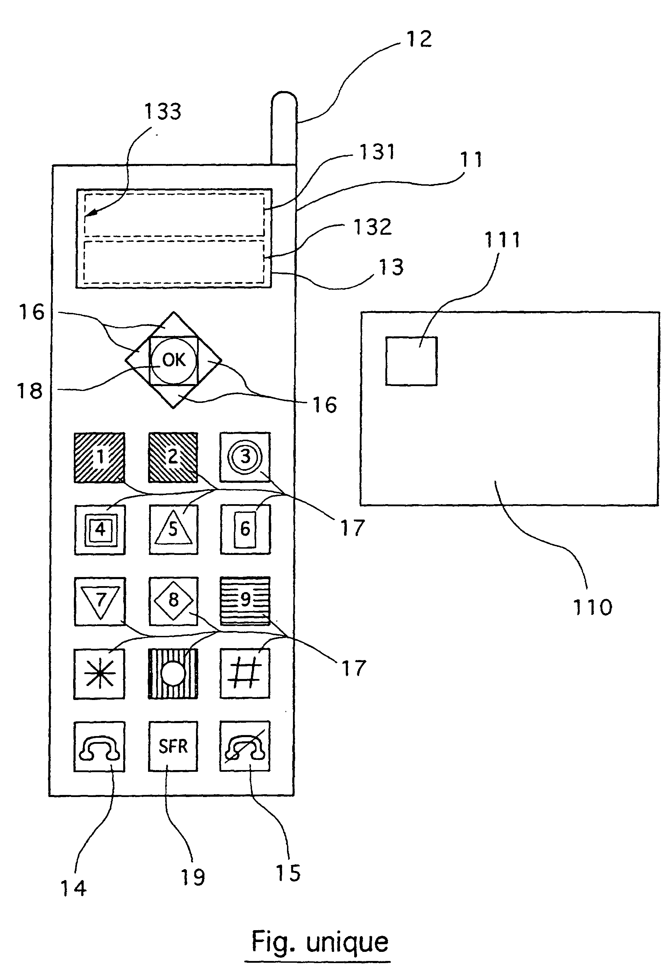

D'autres caractéristiques et avantages de l'invention apparaîtront à la lecture de la description suivante d'un mode de réalisation préférentiel de l'invention, donné à titre de simple exemple indicatif et non limitatif, et en référence au dessin dans lequel la figure unique illustre un schéma simplifié d'un mode de réalisation particulier d'un terminal téléphonique selon l'invention.

L'invention concerne donc un terminal téléphonique permettant notamment un accès et/ou une sélection simple, rapide, aisée et efficace d'au moins certain(s) item(s) d'au moins certain(s) menu(s) (ou sous-menu(s)).

Dans la suite de la description, en tant que terminal téléphonique, on considère le cas d'un radiotéléphone (ou terminal téléphonique mobile) d'un système de radiocommunication de type GSM. Il est clair cependant que l'invention s'applique à tout type de terminal téléphonique (fixe ou mobile). L'homme du métier saura aisément transposer l'invention notamment au cas d'un terminal téléphonique de type fixe.

On présente maintenant, en relation avec le schéma simplifié de la figure unique, un mode de réalisation particulier d'un terminal téléphonique selon l'invention.

De façon classique, le terminal 11 téléphonique comprend notamment :
- une antenne 12 permettant l'échange de signaux (émission et/ou réception) avec une station de base (non représentée) ;
- un écran 13 de visualisation présentant typiquement une taille réduite à quelques lignes et permettant notamment de visualiser des menus, comportant chacun une pluralité d'items, sur une fenêtre 131 active ou sur l'ensemble des fenêtres 131, 132 ; et
- un clavier présentant une pluralité de touches dont notamment :
   - une touche 14 de prise de ligne, permettant l'établissement d'une communication ;
   - une touche 15 de rupture de ligne, permettant d'interrompre une communication précédemment établie ;
   - des touches 16 de déplacement horizontal et vertical et/ou de défilement permettant de déplacer un curseur au sein d'un menu et/ou de faire défiler les items sur la première ligne de la fenêtre 131 active de l'écran 13, face à un repère 133. Chaque item correspond à une option susceptible d'être activée sélectivement par un utilisateur du terminal 11 téléphonique ;
   - des touches 17 de numérotation et/ou d'entrée de donnée(s) ou de code permettant notamment de composer un numéro de téléphone et/ou de saisir des données alphanumériques à insérer dans un fichier ou une base de données créé(e) par l'utilisateur du terminal 11 téléphonique ; et
   - une touche 18 de sélection permettant notamment de sélectionner un item d'un menu visualisé à l'écran 13. L'item sélectionné est, dans l'exemple précité, celui qui se trouve sur la première ligne de la fenêtre 131 active, ou celui qui est face au repère référencé 133.

D'une façon générale, la sélection d'un item revient à activer une option correspondant par exemple à une fonction, une donnée ou un service, voire un sous-menu.

Egalement de façon classique, le terminal 11 téléphonique peut coopérer avec un module 110 d'identification d'abonné (ou SIM). Ce module 110 d'identification d'abonné est une carte comportant un microprocesseur 111 permettant d'une part de stocker certaines données, et d'autre part de piloter le terminal 11 téléphonique. Le couple terminal 11 téléphonique/module 110 d'identification d'abonné offre différentes fonctionnalités propres à l'abonné, au réseau et à la sécurité, telles que par exemple :
- mémoriser des numéros téléphoniques ;
- mémoriser des messages courts ;
- mémoriser des opérateurs réseau préférentiels ;
- mémoriser une liste de numéros d'appel fixe à laquelle l'abonné souhaite se restreindre ;
- mémoriser la gestion de l'itinérance dans le système de radiocommunication concerné ;
- mémoriser le numéro d'identification international de l'abonné mobile selon les normes IMSI-TMSI ;
- mémoriser des données caractéristiques de la cellule associée à la station de base dans laquelle le terminal 11 téléphonique se trouve ;
- authentifier l'abonné vis-à-vis du réseau ;
- authentifier, de façon passive, l'abonné par un code secret.

Le module 110 d'identification d'abonné gère, via l'implémentation d'une boîte à outils logicielle (appelée "SIM Application Toolkit"), la présentation de nouveaux services à l'utilisateur et permet à des opérateurs, ainsi qu'à des offreurs de services tiers, de créer leurs applications spécifiques selon la recommandation GSM 11.14 phase 2⁺. Cette dernière recommandation indique tous les mécanismes permettant l'interopérabilité entre le terminal 11 téléphonique et le module 110 d'identification d'abonné pour utiliser la boîte à outils.

Selon l'invention, le terminal 11 téléphonique ou le module 110 d'identification d'abonné avec lequel il coopère comprend des moyens 111 de gestion des menus, affectant sélectivement à au moins certains des items d'au moins certains des menus au moins une touche 17 du clavier. L'appui d'au moins une des touches 17 assure la sélection de l'item correspondant.

Un simple appui sur une unique touche (cas le plus simple) ou sur une combinaison de touches permet ainsi d'accéder à et de sélectionner l'item désiré, de manière rapide, aisée et efficace.

Le nombre d'items présentés par au moins certains menus est de préférence inférieur au nombre de touches 17 d'accès et de sélection prévues sur le clavier. Ainsi, dans l'exemple illustré, en construisant des menus comprenant au maximum douze items, on peut affecter à chaque item, l'une des douze touches 17 d'accès et de sélection.

L'appui sur une touche ou sur une combinaison de touches 17 peut être effectué selon différents modes de réalisation. Cet appui peut être par exemple court ou au contraire long, ou être répété au moins une fois et éventuellement à intervalle de temps régulier ou non.

On peut même prévoir qu'un appui long assure, tout d'abord, une visualisation de l'item correspondant sur la fenêtre 131 active de l'écran 13 (l'item jusqu'ici non visible apparaît, alors, par exemple sur la première ligne de la fenêtre 131 active), puis une activation de cet item.

La facilité d'accès et de sélection de ces items disponibles permet à l'utilisateur du terminal téléphonique d'effectuer un accès et une sélection "sans zone d'ombre", c'est-à-dire avec une égale sélectivité de l'ensemble des items, même dans le cas où le menu (ou sous-menu) comporte un nombre d'items si élevé qu'ils ne peuvent pas apparaître tous simultanément sur la fenêtre 131 active de l'écran 13 .

Pour inciter l'utilisateur à accéder à certains items prédéterminés ou pour lui fournir une aide visuelle globale sur tous les items accessibles et sélectionnables, le clavier peut comprendre, à proximité des touches 17 (ou sur les touches elles-mêmes), des éléments d'identification tels que des indicateurs lumineux (LED ou autres) et/ou des indicateurs écrits (textes ou icônes) et/ou des mises en relief, etc..., permettant de distinguer les items correspondants entre eux. En conséquence, l'utilisateur prend de suite connaissance des divers items (et donc d'éventuels services) disponibles.

On notera que l'invention n'impose aucune contrainte quant à la nature de des éléments d'identification associés à certaines touches 17.

De plus, on peut prévoir que les éléments d'identification confèrent un ordre d'accès prioritaire aux items auxquels ils sont affectés. Il s'agit, dans ce cas, de faire ressortir un ou plusieurs items, selon les souhaits de l'opérateur, par rapport à l'ensemble des items proposés.

Comme indiqué ci-dessus, les moyens de gestion des menus peuvent être, au moins partiellement, présents dans le module 110 d'identification d'abonné. Il est à noter que la technique d'accès (par défilement) et de sélection (utilisation d'une touche spécifique) de l'art antérieur peut également être proposée, en tant qu'alternative, à l'utilisateur.

On décrit à présent, un mode de réalisation particulier d'un procédé selon l'invention de gestion de la visualisation de menus.

Selon l'invention, on affecte sélectivement à au moins certain(s) item(s) d'au moins certain(s) menu(s) au moins une touche du clavier. Il s'agit de permettre, par l'appui (simultané ou successif) d'une touche (ou d'une combinaison de touches) d'assurer directement l'accès et la sélection de l'item correspondant.

Il convient de noter que les touches affectées selon l'invention sont soit de nouvelles touches supplémentaires, spécifiques à l'accès et à la sélection d'items de menus (ou de sous-menus), soit des touches 17 déjà existantes. Dans le second cas, les touches 17 existantes sont réutilisées et permettent, outre leur fonction première (par exemple composition d'un numéro de téléphone), l'accès et la sélection d'items de menus actifs. Il est clair qu'à un instant donné, une même touche multi-fonctions ne peut jouer qu'un seul rôle, ce dernier dépendant de la configuration active.

Les menus peuvent se présenter sous la forme d'une structure hiérarchisée imposant de passer obligatoirement par un menu principal, qui constitue le niveau hiérarchique supérieur, pour accéder aux sous-menus situés à au moins un niveau hiérarchique inférieur (à celui du menu principal). Ce menu principal peut être accessible à l'aide d'une touche spécifique à l'opérateur (par exemple une touche "SFR" (marque déposée)) référencée 19 du clavier. Cette touche 19 est dédiée à cet accès et permet un affichage immédiat sur la fenêtre 131 active du menu principal "opérateur".

L'affectation des touches 17 est par exemple effectuée conformément à une norme prédéterminée selon laquelle la composition de chacun des menus se présente d'une façon unique et prédéterminée. Par exemple, l'ordre croissant des touches numériques correspond à l'ordre croissant d'utilisation des items : la touche "0" étant affectée à l'item le moins utilisé, tandis que la touche "9" est affectée à l'item le plus utilisé.

Les menus peuvent, en outre, être conçus de façon que chacun des items soit affecté à au moins une des touches 17 distincte du terminal 11 téléphonique. Selon notre exemple, il n'existe alors pas plus de douze items par menu ou sous-menu (correspondant au nombre de touches 17).

Afin d'éviter toute erreur (telle que le lancement d'un service non voulu suite à une mauvaise manipulation de l'utilisateur), les items associés à des services peuvent être compris dans les sous-menus situés en fin d'arborescence. Les sous-menus intermédiaires (placés entre le menu principal et les sous-menus situés en fin d'arborescence contenant des items correspondant à des services) sont alors réservés à des fonctions de navigation au sein de la structure hiérarchisée des menus.

Dans ce cadre de structure en arborescence, on peut notamment envisager d'utiliser une combinaison de touche(s) dite(s) de raccourci. Cette combinaison de touche(s) de raccourci présente l'avantage d'éviter l'affichage du (des) sous-menu(s) présent(s) entre le menu (ou sous-menu) actif et le sous-menu comprenant l'item recherché, dans le but de gagner du temps. On comprend que, dans ce cas, le menu (ou sous-menu) actif "de départ" est situé au moins deux niveaux au-dessus ou en dessous du sous-menu "de destination".

D'une façon générale, lorsqu'un sous-menu est affiché à l'écran, l'affectation des touches est reconfigurée, de telle sorte que cette reconfiguration soit adaptée spécifiquement au sous-menu présent à l'écran 13. En d'autres termes, une même touche peut être utilisée pour accéder à et sélectionner différents items appartenant chacun à un menu (ou sous-menu) distinct.

A titre d'exemple de manipulation possible, un utilisateur du terminal 11 téléphonique peut appuyer sur la touche 19 pour accéder au menu principal, puis presser, simultanément, les touches 17 correspondant au "0" et au sigle "*" pour avoir accès directement à un sous-menu de réservation de place de cinémas. Enfin, l'utilisateur peut actionner l'une des touches référencées 17 (par exemple celle correspondant au " 9 " lorsqu'elle est utilisée pour composer un numéro de téléphone), pour visualiser, accéder et sélectionner un item permettant la réservation d'une place pour un film prédéterminé et actuellement à l'affiche.

## Revendications

1. Terminal (11) téléphonique comprenant un clavier présentant un jeu de touches (14 à 19), un écran (13) de visualisation permettant notamment la visualisation de menus, particulièrement des menus dits "menus opérateur", formés chacun d'une pluralité d'items, chacun desdits items correspondant à une option susceptible d'être activée sélectivement par un utilisateur dudit terminal (11) téléphonique, et un lecteur de données, présents dans un support de données amovible destiné à être inseré dans ledit lecteur **caractérisé en ce qu'**il comprend des moyens (111) de gestion desdits menus, particulièrement des menus dits «menus opérateur», affectant sélectivement à au moins certain(s) desdits items d'au moins certain(s) desdits menus particulièrement les «menus opérateur», au moins une touche (17) dudit clavier, l'appui de ladite au moins une touche (17) assurant directement la sélection de l'item correspondant, lesdits moyens de gestion desdits menus, particulièrement les «menus opérateur», sont au moins partiellement présents dans ledit support.

2. Terminal (11) téléphonique selon la revendication 1, **caractérisé en ce que** ledit clavier comprend, à l'intérieur de et/ou sur et/ou à proximité d'au moins une desdites touches (17), au moins un élément d'identification de l'item associé à ladite au moins une touche (17) dans au moins un desdits menus.

3. Terminal (11) téléphonique selon l'une quelconque des revendications 1 et 2, **caractérisé en ce que** l'appui sur une unique touche (17) dudit clavier assure directement la sélection de l'item correspondant.

4. Terminal (11) téléphonique selon l'une quelconque des revendications 1 à 3, **caractérisé en ce que** l'appui sur ladite au moins une touche (17) assure une visualisation puis une activation dudit item affecté à ladite au moins une touche.

5. Terminal (11) téléphonique selon l'une quelconque des revendications 1 à 4, **caractérisé en ce qu'**il permet l'accès à au moins deux niveaux successifs de menus, l'affectation de ladite au moins une touche (17) étant spécifiquement adaptée à chacun desdits menus.

6. Terminal (11) téléphonique selon l'une quelconque des revendications 1 à 5, **caractérisé en ce que** ladite affectation de ladite au moins une touche (17) est effectuée conformément à une norme prédéterminée selon laquelle la composition de chacun desdits menus se présente d'une façon unique et prédéterminée, lesdits menus étant conçus de façon que chacun desdits items est affecté à au moins une touche (17) distincte dudit terminal (11) téléphonique.

7. Terminal (11) téléphonique selon l'une quelconque des revendications 1 à 6, **caractérisé en ce que** lesdits menus comprennent un menu principal et des sous-menus accessibles depuis le menu principal,
et **en ce que** ledit menu principal est accessible à l'aide d'une touche (19) du clavier dédiée à cet accès.

8. Terminal (11) téléphonique selon l'une quelconque des revendications 1 à 7, **caractérisé en ce que** l'accès auxdits items est également possible, dans chacun desdits menus, à l'aide de moyens (16) permettant le défilement d'une indication (133) de pré-sélection dans ledit menu et d'une commande de validation (18) de ladite pré-sélection.

9. Terminal (11) téléphonique selon l'une quelconque des revendications 1 à 8, **caractérisé en ce qu'**il s'agit d'un radiotéléphone (11) d'un système de radiocommunication.

10. Terminal (11) téléphonique selon la revendication 9, **caractérisé en ce que** ledit système de radiocommunication appartient au groupe comprenant :
- les systèmes de radiocommunication de type GSM ;
- les systèmes de radiocommunication de type DCS 1800 ;
- les systèmes de radiocommunication de type PCS 1900 ;
- les systèmes de radiocommunication de type UMTS ;
- les systèmes de radiocommunication de type DECT.

11. Terminal (11) téléphonique selon la revendication 1, **caractérisé en ce que** ledit support de données amovible est intégré au moins en partie dans un module (110) d'identification d'abonné.

12. Procédé de gestion de la visualisation de menu(s), particulièrement des menus dits «menus opérateur», dans un terminal (11) téléphonique comprenant un clavier et un écran (13) de visualisation, lesdits menus étant formés chacun d'une pluralité d'items, chacun desdits items correspondant à une option susceptible d'être activée sélectivement par un utilisateur dudit terminal (11) téléphonique, **caractérisé en ce qu'**il affecte sélectivement à au moins certain(s) desdits items d'au moins certain(s) desdits menus, particulièrement les «menus opérateur», au moins une touche (17) dudit clavier, l'appui d'au moins une desdites touches (17) assurant directement la sélection de l'item correspondant, lesdits moyens de gestion desdits menus, particulièrement les «menus opérateur», sont au moins partiellement présents dans un support de données amovible destiné à être inséré dans le lecteur correspondant dudit terminal téléphonique

## Patentansprüche

1. Telefonendgerät (11), das eine Tastatur mit einem Satz Tasten (14 bis 19), einen Anzeigebildschirm (13), mit dem insbesondere "Benutzermenüs" genannte Menüs angezeigt werden können, die jeweils aus einer Vielzahl von Punkten gebildet sind, wobei jeder dieser Punkte einer Option entspricht, die selektiv von einem Benutzer des Telefonendgerätes (11) aktiviert werden kann, und ein Gerät zum Lesen von Daten aus einem herausnehmbaren Datenträger, der in das Lesegerät eingefügt wird, aufweist,
**dadurch gekennzeichnet, dass** es Mittel (111) zum Verwalten der besagten Menüs aufweist und insbesondere "Benutzermenüs" genannte Menüs, welche selektiv mindestens einen bestimmten Punkt bzw. bestimmte Punkte von mindestens einem (einigen) bestimmten dieser Menüs, insbesondere die "Benutzermenüs", mindestens eine Taste (17) der Tastatur zuordnen, wobei das Betätigen dieser mindestens einen Taste (17) direkt die Wahl des entsprechenden Punktes bewirkt, wobei die Mittel zum Verwalten dieser Menüs und insbesondere der "Benutzermenüs" mindestens teilweise im erwähnten Datenträger enthalten sind.

2. Telefonendgerät (11) nach Anspruch 1, **dadurch gekennzeichnet, dass** die Tastatur innerhalb und/oder auf und/oder in der Nähe von mindestens einer der Tasten (17) mindestens ein Element zum Identifizieren des mit dieser mindestens einen Taste (17) in mindestens einem der erwähnten Menüs assoziierten Punktes aufweist.

3. Telefonendgerät (11) nach einem der Ansprüche 1 oder 2, **dadurch gekennzeichnet, dass** das Betätigen einer einzigen Taste (17) der Tastatur direkt die Wahl des entsprechenden Punktes bewirkt.

4. Telefonendgerät (11) nach einem der Ansprüche 1 bis 3, **dadurch gekennzeichnet, dass** das Betätigen der mindestens einen Taste (17) die Anzeige und dann die Aktivierung des dieser mindestens einen Taste zugeordneten Punktes bewirkt.

5. Telefonendgerät (11) nach einem der Ansprüche 1 bis 4, **dadurch gekennzeichnet, dass** es den Zugang zu mindestens zwei aufeinander folgenden Menüebenen ermöglicht, wobei die Zuordnung der mindestens einen Taste (17) spezifisch einem jeden der erwähnten Menüs angepasst ist.

6. Telefonendgerät (11) nach einem der Ansprüche 1 bis 5, **dadurch gekennzeichnet, dass** die Zuordnung der erwähnten mindestens einen Taste (17) gemäß einer vorgegebenen Norm erfolgt, nach welcher die Zusammensetzung eines jeden der Menüs in eindeutiger und vorbestimmter Form gegeben ist, wobei diese Menüs derart konzipiert sind, dass jeder der Punkte mindestens einer verschiedenen Taste (17) des Telefonendgerätes (11) zugeordnet ist.

7. Telefonendgerät (11) nach einem der Ansprüche 1 bis 6, **dadurch gekennzeichnet, dass** die erwähnten Menüs ein Hauptmenü und Untermenüs aufweisen, die vom Hauptmenü aus zugänglich sind und,
dass das Hauptmenü mit Hilfe einer diesem Zweck zugeordneten Taste (19) auf der Tastatur zugänglich ist.

8. Telefonendgerät (11) nach einem der Ansprüche 1 bis 7, **dadurch gekennzeichnet, dass** der Zugang zu den besagten Punkten innerhalb eines jeden der Menüs ebenfalls mit Hilfe von Mitteln (16) möglich ist, die das Ablaufen einer vorherigen Wahlangabe (133) innerhalb dieses Menüs ermöglichen sowie mit Hilfe eines Validierungsbefehls (18) der besagten vorherigen Wahlangabe.

9. Telefonendgerät (11) nach einem der Ansprüche 1 bis 8, **dadurch gekennzeichnet, dass** es sich um ein Funktelefon (11) eines Funk-Kommunikationsnetzes handelt.

10. Telefonendgerät (11) nach Anspruch 9, **dadurch gekennzeichnet, dass** das Funk-Kommunikationssystem der folgendes umfassenden Gruppe angehört:
- die GSM-Funk-Kommunikationssysteme;
- die DCS 1800-Funk-Kommunikationssysteme;
- die PCS 1900-Funk-Kommunikationssysteme;
- die UMTS-Funk-Kommunikationssysteme;
- die DECT-Funk-Kommunikationssysteme.

11. Telefonendgerät (11) nach Anspruch 1, **dadurch gekennzeichnet, dass** der herausnehmbare Datenträger mindestens teilweise in ein Mitgliederldentifizierungsmodul (110) integriert ist.

12. Verfahren zum Verwalten der Anzeige eines (von) Menüs und insbesondere von "Benutzermenüs" genannten Menüs in einem Telefonendgerät (11), welches eine Tastatur und einen Bildschirm (13) aufweist, wobei die Menüs jeweils aus einer Vielzahl von Punkten gebildet sind, wobei jeder dieser Punkte einer Option entspricht, die selektiv von einem Benutzer des Telefonendgerätes (11) aktiviert werden kann,
**dadurch gekennzeichnet, dass** es in selektiver Weise mindestens einem bestimmten Punkt bzw. bestimmter Punkte von mindestens einem (einigen) dieser Menüs und insbesondere den "Benutzermenüs" mindestens eine Taste (17) der Tastatur zuordnet, wobei das Betätigen von mindestens einer dieser Tasten (17) direkt die Wahl des entsprechenden Punktes bewirkt, wobei die erwähnten Mittel zum Verwalten der Menüs und insbesondere der "Benutzermenüs" genannten Menüs mindestens teilweise in einem herausnehmbaren Datenträger enthalten sind, der in die entsprechende Lesevorrichtung des Telefonendgerätes eingeführt wird.

## Claims

1. Telephone terminal (11) comprising a keypad having a set of keys (14 to 19), a display screen (13) which can be used, in particular, for displaying menus, particularly menus known as "operator menus", each consisting of a plurality of items, each of the said items corresponding to an option which can be activated selectively by a user of the said telephone terminal (11), and a data reader for reading data on a removable data medium which can be inserted in the said reader, **characterized in that** it comprises means (111) for managing the said menus, particularly the menus known as "operator menus", by selectively assigning to at least one or some of the said items on at least one or some of the said menus, particularly the "operator menus", at least one key (17) of the said keypad, the pressing of the said at least one key (17) directly causing the selection of the corresponding item, the said means of managing the said menus, particularly the "operator menus", being at least partially present on the said medium.

2. Telephone terminal (11) according to Claim 1, **characterized in that** the said keypad comprises, within and/or on and/or in the proximity of at least one of the said keys (17), at least one element for identifying the item associated with the said at least one key (17) in at least one of the said menus.

3. Telephone terminal (11) according to either one of Claims 1 and 2, **characterized in that** pressing the said single key (17) on the said keypad directly causes the selection of the corresponding item.

4. Telephone terminal (11) according to any one of Claims 1 to 3, **characterized in that** pressing the said at least one key (17) causes the display and then the activation of the said item assigned to the said at least one key.

5. Telephone terminal (11) according to any one of Claims 1 to 4, **characterized in that** it allows access to at least two successive levels of menus, the assignment of the said at least one key (17) being specifically adapted to each of the said menus.

6. Telephone terminal (11) according to any one of Claims 1 to 5, **characterized in that** the said assignment of the said at least one key (17) is carried out in accordance with a predetermined standard according to which the composition of each of the said menus is presented in a unique and predetermined way, the said menus being designed so that each of the said items is assigned to at least one distinct key (17) of the said telephone terminal (11).

7. Telephone terminal (11) according to any one of Claims 1 to 6, **characterized in that** the said menus comprise a main menu and submenus accessible from the main menu, and **in that** the said main menu is accessible by means of a key (19) of the keypad dedicated to this access.

8. Telephone terminal (11) according to any one of Claims 1 to 7, **characterized in that** access to the said items is also possible, in each of the said menus, with the aid of means (16) for scrolling an indicator (133) of preselection from the said menus and a validation command (18) for the said preselection.

9. Telephone terminal (11) according to any one of Claims 1 to 8, **characterized in that** this terminal is a mobile telephone (11) belonging to a radio communication system.

10. Telephone terminal (11) according to Claim 9, **characterized in that** the said radio communication system belongs to the group comprising:
- GSM radio communication systems;
- DCS 1800 radio communication systems;
- PCS 1900 radio communication systems;
- UMTS radio communication systems;
- DECT radio communication systems.

11. Telephone terminal (11) according to Claim 1, **characterized in that** the said removable data medium is at least partially incorporated in a subscriber identification module (110).

12. Method for managing the display of menu(s), particularly of menus known as "operator menus", in a telephone terminal (11) comprising a keypad and a display screen (13), each of the said menus consisting of a plurality of items, each of the said items corresponding to an option which can be activated selectively by a user of the said telephone terminal (11), **characterized in that** it assigns selectively to at least one or some of the said items on at least one or some of the said menus, particularly the "operator menus", at least one key (17) of the said keypad, the pressing of at least one of the said keys (17) directly causing the selection of the corresponding item, the said means of managing the said menus, particularly the "operator menus", being at least partially present in a removable data medium intended to be inserted into the corresponding reader of the said telephone terminal.
